Europäisches Patentamt

European Patent Office        (11) Numéro de publication:        **0 223 652**
                                                               A1
Office européen des brevets

(12)                        **DEMANDE DE BREVET EUROPEEN**

(21) Numéro de dépôt: **86402246.2**        (51) Int. Cl.⁴: **G 11 B 20/10, G 11 B 31/00**

(22) Date de dépôt: **10.10.86**

(30) Priorité: **14.10.85 FR 8515180**

(71) Demandeur: **Giusto, Marc, 81, rue Marcadet, F-75018 Paris (FR)**

(43) Date de publication de la demande: **27.05.87 Bulletin 87/22**

(72) Inventeur: **Giusto, Marc, 81, rue Marcadet, F-75018 Paris (FR)**

(84) Etats contractants désignés: **AT BE CH DE FR GB IT LI NL**

(74) Mandataire: **Lemoine, Michel et al, Cabinet Michel Lemoine et Bernasconi 13 Boulevard des Batignolles, F-75008 Paris (FR)**

(54) **Convertisseur pour lecteur de compact-disques.**

㊌ Dans un système de reproduction sonore des lecteurs de compact-disques (1) à l'aide d'un amplificateur haute-fidélité (6), la sortie (4) du lecteur (1) est reliée non pas à l'entrée linéaire ou auxiliaire (5) de l'amplificateur (6), mais à son entrée phono (8) par l'intermédiaire d'un convertisseur (7) propre à transformer le signal linéaire reçu de la sortie (4) en signal RIAA phonographique.

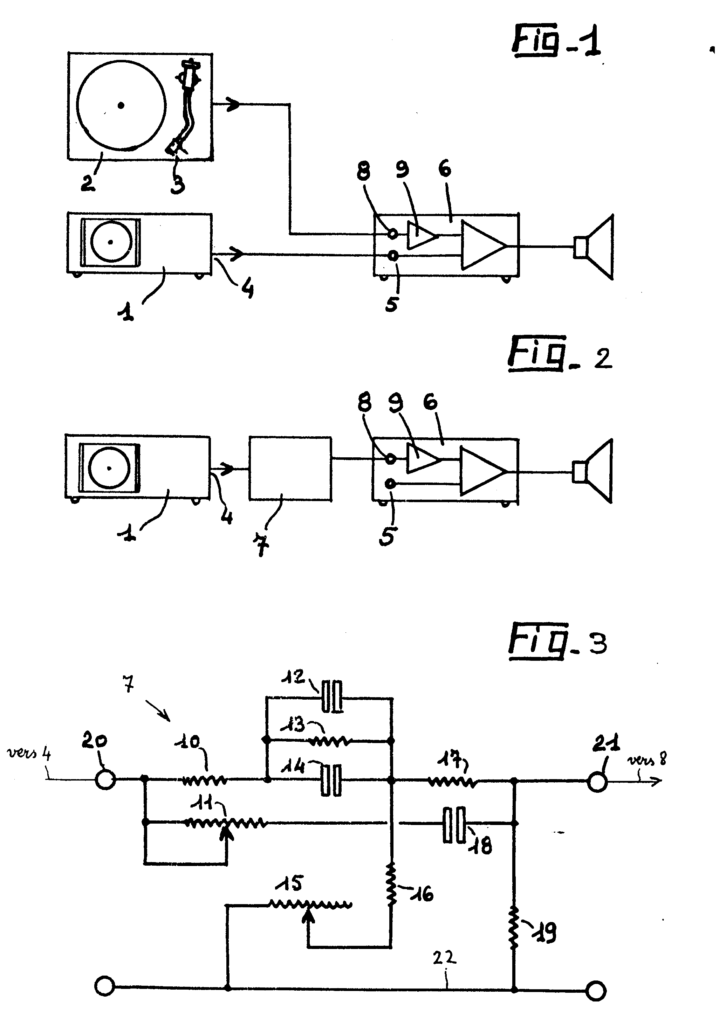

La présente invention a pour objet l'amélioration de la reproduction sonore des lecteurs de compact-disques ou CD (1) dits à lecture laser (Fig. 1).

Par rapport au son produit par les platines (2) et cellules lectrices (3) de disques microsillons de haut de gamme, le son émis par le lecteur de compact-disques est reconnu agressif et manquant de musicalité.

Actuellement, la sortie du signal (4) est conçue pour être branchée sur l'entrée linéaire (ou auxiliaire) (5) des amplificateurs haute-fidélité (6). Le gain moyen des lecteurs CD (1) s'en trouve réduit. Le niveau de sortie (4) est insuffisant. La qualité des timbres est discutable. Le son manque de dynamique. On ressent également un manque de présence dans le bas médium. Dans l'aigu, l'agressivité est omniprésente.

L'invention consiste à pallier les défauts précités en insérant (Fig. 2 ), un convertisseur (7) de signal linéaire en signal phonographique aux normes RIAA internationales, entre la sortie du signal de modulation (4) du lecteur CD (1) et l'entrée phono (8) des amplificateurs haute-fidélité (6) afin de recréer un signal ayant la même forme que celui qui est habituellement produit par une cellule (3) de platine tourne-disque microsillon de très haut niveau (2), la sensibilité des entrées phono (8) étant nettement supé-

2

rieure aux entrées linéaires (5) utilisées jusqu'ici pour les lecteurs de CD.

Les avantages sont :

1° Un gain important en musicalité et dynamique, dû à l'utilisation du préamplificateur phono (9) présent sur tous les amplis HI-FI, le gain obtenu variant de 6dB à 20dB, soit 2 à 10 fois plus de niveau, en fonction des appareils utilisés.

2° Un meilleur équilibre musical (en ajustant les réglages du convertisseur) 11 et 15 - Fig. 3 .

3° Une diminution notable de l'agressivité dans l'aigu.

Descriptif du schéma Fig. 3 du convertisseur 7 Fig. 2 .

Le convertisseur 7 comprend une borne d'entrée 20 pour recevoir le signal 4 sortant du lecteur de compact-disques 1 et une borne de sortie 21 destinée à être reliée à l'entrée phono 8 de l'amplificateur haute fidelité 6. Entre ces bornes 20 et 21 sont montés en série une résistance variable 11 et un condensateur 18 qui permettent le passage des fréquences aiguës vers la borne 21 et le réglage du niveau de ces fréquences aiguës. Plus précisément, la résistance variable 11 permet de choisir la fréquence de coupure aiguë (entre 10 kHz et 30 kHz) en fonction de la fréquence la plus aiguë qui peut reproduire le lecteur 1.

Entre les bornes 20 et 21 sont également montés en série une résistance 10, un circuit composé d'une résistance 13 et de deux condensateurs 12 et 14 en parallèle, et une résistance 17, pour permettre le passage des graves et médium (fréquences de 20 à 3000 Hz) vers la borne 21. Le réglage du niveau de ces fréquence s'effectue à l'aide d'une résistance variable 15 à travers une résistance-butée 16, ces deux résistances 15 et 16 étant branchées en série entre une ligne commune de masse 22 et la jonction entre le circuit 12, 13, 14 et la résistance 17.

Une résistance 19, montée entre la borne de sortie/21 et la ligne commune de masse 22, sert à stabiliser la charge

3

de sortie. La valeur de cette résistance 19 est normalisée à 47 k.ohms.

On effectue les réglages à l'aide des potentiomètres 11 et 15 en utilisant un générateur de signaux rectangulaires (à 1000 Hz) et un oscilloscope double trace. Le signal obtenu à la sortie 21 doit être rigoureusement symétrique (en stéréo) et comporter un front de montée légèrement arrondi, afin de supprimer toute pointe parasite dans l'extrême aigu.

Dans un convertisseur 7 dont les essais ont donné satisfaction, les composants avaient les valeurs suivantes: Résistance 33 k.ohms (10) - potentiomètre ajustable 47 K.ohms (11)-condensateur 660 pF. (12) - résistance 330 K.ohms (13) - Condensateur 10 nF (14) - potentiomètre ajustable 1 K.ohms (15) - Résistance 680 ohms (16) - Résistance 1,8 K.ohm (17) - Condensateur 1000 pF (18) - Résistance 47 K.ohms (19) - Entrée du convertisseur (20). Sortie (21).

Le circuit électronique du convertisseur représenté à la figure 3 peut se monter soit à l'intérieur du lecteur de compact-disques 1, soit à l'extérieur de ce lecteur 1 dans un coffret ou châssis séparé.

Cette invention est applicable à tous les lecteurs de compact-disques ditsà lecture laser.

4

## REVENDICATIONS

1. Système de reproduction sonore des lecteurs de compact-disques (1) à l'aide d'un amplificateur haute-fidélité (6), caractérisé en ce que la sortie (4) du lecteur (1) est reliée non pas à l'entrée linéaire ou auxiliaire (5) de l'amplificateur (6), mais à son entrée phono (8) par l'intermédiaire d'un convertisseur (7) propre à transformer le signal linéaire reçu de la sortie (4) en signal RIAA phonographique.

2. Convertisseur (7) à utiliser dans le système de reproduction conforme à la revendication 1.

3. Circuit électronique du convertisseur conforme à la revendication 2, caractérisé en ce qu'il est monté à l'intérieur du lecteur (1).

4. Circuit électronique du convertisseur conforme à la revendication 2, caractérisé en ce qu'il est monté à l'extérieur du lecteur (1), dans un coffret ou châssis séparé.

0223652

1/1

**Fig.1**

**Fig. 2**

**Fig. 3**

vers 4

vers 8

**Office européen des brevets**

# RAPPORT DE RECHERCHE EUROPEENNE

Numero de la demande

EP 86 40 2246

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FERNSEH- UND KINO-TECHNIK, vol. 38, no. 7, juillet 1984, pages 291-296, Berlin, DE; H.ZANDER: "Grundlagen und Verfahren der digitalen Audio-Technik" * Page 296, colonne de gauche, dernier paragraph * | 1-2 | G 11 B 20/10 G 11 B 31/00 |
| | --- | | |
| Y | JOURNAL OF THE AUDIO ENGINEERING SOCIETY, vol. 27, no. 6, juin 1979, pages 458-481, New York, US; S.P. LIPSHITW: "On RIAA equalization networks" * Page 459, colonne de gauche, ligne 26 - page 460, colonne de gauche, ligne 3 * | 1-2 | |
| | --- | | DOMAINES TECHNIQUES RECHERCHES (Int. Cl.4) |
| A | PATENTS ABSTRACTS OF JAPAN, vol. 6, no. 189 (E-133)[1067], 28 septembre 1982; & JP-A-57 101 493 (NIPPON GAKKI SEIZO K.K.) 24-06-1982 | | G 11 B H 04 R |
| | --- | | |
| A | PATENTS ABSTRACTS OF JAPAN, vol. 9, no. 151 (P-367)[1874],26 juin 1985; & JP-A-60 28 074 (MITSUBISHI DENKI K.K.) 13-02-1985 | | |
| | --- | | |
| A | US-A-4 468 627 (TATSUO FUSHIKI) | | |
| | --- -/- | | |

Le présent rapport de recherche a été établi pour toutes les revendications

| Lieu de la recherche | Date d'achèvement de la recherche | Examinateur |
|---|---|---|
| LA HAYE | 20-12-1986 | CARTRYSSE A.A.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen
des brevets

**RAPPORT DE RECHERCHE EUROPEENNE**

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int Cl.4) |
|---|---|---|---|
| A | FERNSEH- UND KINO-TECHNIK, vol. 39, no. 8, août 1985, pages 395-397, Berlin, DE; H.ZANDER: "Grundlagen und Verfahren der digitalen Audio-Technik" | | |

-----

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 20-12-1986 | CARTRYSSE A.A.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82